# EUROPEAN PATENT SPECIFICATION

(11) **EP 2 654 176 B1**
(45) Date of publication and mention of the grant of the patent: **18.01.2017**
(21) Application number: 12184277.7
(22) Date of filing: 13.09.2012
(51) Int. Cl.: H02J 9/06

(54) **Power supply apparatus and controlling method of the same**
Stromversorgungsvorrichtung und Steuerungsverfahren dafür
Appareil d'alimentation électrique et son procédé de contrôle

(30) Priority: 18.04.2012 US 201261635207 P; 29.08.2012 US 201213597952
(43) Date of publication of application: 23.10.2013
(73) Proprietor: Samsung SDI Co., Ltd., Yongin-si, Gyeonggi-do (KR)
(72) Inventor: Son, Seung-Hyun, Gyeonggi-do (KR); Lee, Chan-Jae, Gyeonggi-do (KR); Chung, Gon-Jin, Gyeonggi-do (KR); Choi, Bo-Ra, Gyeonggi-do (KR); Park, Sin-Young, Gyeonggi-do (KR)
(74) Representative: Gulde & Partner

(56) References cited:
- EP-A2- 2 346 138
- JP-A- 2010 257 884
- US-A- 4 673 826
- US-A1- 2012 025 614

## Description

### TECHNICAL FIELD

The present invention relates to a power supply apparatus and a controlling method of the same.

### BACKGROUND OF THE INVENTION

A power supply apparatus is an apparatus for temporarily supplying power to prevent damage to a load or save data the load processes when an abnormal situation occurs in a power source that supplies power to the load and thus a blackout occurs.

The power supply apparatus includes an internal battery to store electric energy. When an abnormal situation occurs in a power source for supplying power to a load, as described above, the power supply apparatus supplies the electric energy stored in the battery to the load. Also, the power supply apparatus includes a battery controller for controlling the battery to detect a state of the battery or to control charge/discharge operations of the battery.

EP 2 346 138 A2 discloses a power storage apparatus with a battery which is, in an abnormal state of the grid, simultaneously charged and used to supply power. Therefore, the battery comprises battery units some of which are charged and some of which are used to supply power.

US 4 673 826 A discloses an autonomous uninterruptable power supply with a backup battery. A battery charger maintains voltage and current levels of the backup battery.

### SUMMARY OF THE INVENTION

The present invention is defined by independent claim 1, and provides a power supply apparatus including a plurality of battery groups of batteries and capable of stably supplying power to a load during a blackout or during a particular time period, and a controlling method of the same.

Accordingly, a power supply apparatus is provided comprising an input terminal adapted to receive an external AC power; an output terminal adapted to output a first AC power, a first power conversion unit adapted to convert the received external AC power to a first DC power and outputs the first DC power; a second power conversion unit adapted to convert a DC power to a first AC power and outputs the first AC power to the output terminal; a first node electrically connected between the output of the first power conversion unit and the input of the second power conversion unit; a control unit adapted to control the operations of the first and second power conversion units; and a first and a second battery group each connected to the control unit and electrically connectable to first node. The first and second battery groups are distinct from each other and can be separately connected to the first node. The control unit is adapted to dynamically allocate one of the first and the second battery group as a first dynamic battery group and the other of the first and the second battery group as a second dynamic battery group depending on a predetermined condition, wherein the first dynamical group acts in a power supply mode, and the second dynamic battery group acts in a standby mode.

The power supply apparatus further comprises a bypass circuit electrically connected to the input terminal and the output terminal to bypass the first and second power conversion units.

The power supply apparatus preferably further comprises a first switching unit connected between the input terminal of the power supply apparatus and the input of the first power conversion unit, and a second switching unit electrically connected between the output of the second power conversion unit and the output terminal of the power supply apparatus, wherein the control unit is adapted to control the operation of the first and second switching elements.

The power supply apparatus may further comprise a third switching unit electrically connected on one end to the first node and on the other end to the first battery group, and a fourth switching unit electrically connected on one end to the first node and on the other end to the second battery group, wherein the control unit is adapted to control the operation of the third and fourth switching elements such that the first dynamic battery group is connected to the first node and the second dynamic battery group is not connected to the first node.The control unit is preferably adapted to determine a normal operation state, and the predetermined condition corresponds to a first emergency situation, which corresponds to a blackout at the input terminal. The predetermined condition may further correspond to a second emergency situation, which corresponds to the case where a power for a load at the output terminal of the power supply apparatus exceeds the power at the input terminal.

Upon the determination of an end of the first or second emergency situation, respectively, the control unit is adapted to stop supplying energy of the first dynamic battery group and is adapted to electrically connect the input terminal to the respective first dynamic battery group to recharge the first dynamic battery group.

In the second emergency situation, the control unit is adapted to control supply of the external AC power to the output terminal of the power supply apparatus in addition to the energy of the first dynamic battery group.

The control unit may be further adapted to compare a state of charge of the first and second battery groups such that the battery group with higher state of charge is used for power supply.

The control unit may be further adapted to compare a count or number of use of the first and second battery groups such that the battery group with the lower number or count of use is used for power supply.

The control unit may be further adapted to compare the temperature of the first and second battery groups such that the battery group with lower temperature is used for power supply.

The control unit may be further adapted to control supply of the input external AC power to the output of the power supply apparatus in a normal operation state.

A battery management system may be further provided adapted to control charging and discharging of the first and second battery group, wherein the battery management system is connected to the control unit.

The power supply apparatus may further comprise a plurality of temperature sensors for measuring the temperature of the first and second battery group.

The control unit may be further adapted to change assignment of a first or second battery group to the first dynamic battery group if the electric energy stored in the assigned battery group falls below the required energy level.

As described above, according to the present invention, batteries provided in a power supply apparatus are formed in a plurality of battery groups, and thus, according to the type of emergency, while any one battery group operates in a power supply mode, another battery group operates in a standby mode so that power may be stably supplied to a load.

### BRIEF DESCRIPTION OF THE DRAWINGS

FIG. 1 is a block diagram illustrating a power supply apparatus according to an embodiment of the present invention.
FIGS. 2A to 2C are views illustrating operational states of first and second battery groups according to a change in power.
FIG. 3 is a block diagram illustrating a power supply apparatus according to another embodiment of the present invention.
FIG. 4A/B is a flowchart showing a method of controlling a power supply apparatus, according to an embodiment of the present invention.
FIG. 5 is a flowchart showing a method of controlling a power supply apparatus, according to another embodiment of the present invention.
FIG. 6 is a flowchart showing a method of controlling a power supply apparatus, according to another embodiment of the present invention.
FIG. 7 is a flowchart showing a method of controlling a power supply apparatus, according to another embodiment of the present invention.
FIG. 8 is a block diagram illustrating a power supply apparatus according to another embodiment of the present invention.
FIG. 9 is a block diagram illustrating a power supply apparatus according to another embodiment of the present invention.
FIG. 10 is a block diagram illustrating a power supply apparatus according to another embodiment of the present invention.

### DETAILED DESCRIPTION OF THE INVENTION

The embodiments of the present invention are described below in detail with reference to the accompanying drawings. However, the present invention is not limited thereto and it will be understood that various changes in form and details may be made therein without departing from the scope of the following claims. In the following description, when detailed descriptions about related well-known functions or structures are determined to make the gist of the present invention unclear, the detailed descriptions will be omitted herein.

Hereinafter, the present invention will be described in detail by explaining exemplary embodiments of the invention with reference to the attached drawings. Like reference numerals in the drawings denote like elements and repeated descriptions thereof are omitted.

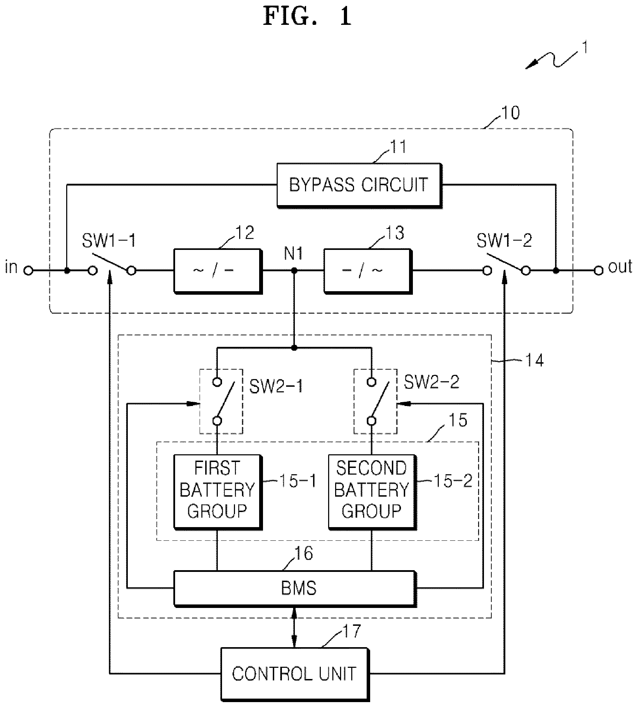

FIG. 1 is a block diagram illustrating a power supply apparatus 1 according to an embodiment of the present invention.

Referring to FIG. 1, the power supply apparatus 1 according to the present embodiment includes a power supply circuit 10, a battery pack 14, and a control unit 17. Also, the power supply apparatus 1 includes an input terminal "in" and an output terminal "out".

Power from an external power source is applied to the input terminal "in" to be supplied to a load.

The output terminal "out" may be connected to the load and outputs an external power to the load. Also, when a blackout is caused by a malfunction of the external power source or an overload is generated as supplied power exceeds a maximum supplied power for a particular time period, the output terminal "out" may use electric energy stored in a battery 15 to output a first AC power to the load.

The power supply circuit 10 supplies power for operations of the load and a battery management system (BMS) 16. The power supply circuit 10 may include a bypass circuit 11, a first switching element SW1-1, a second switching element SW1-2, and a first power conversion unit 12, and a second power conversion unit 13.

The bypass circuit 11 is connected between the input terminal "in" and the output terminal "out" and transfers the external power directly to the output terminal "out" without conversion.

The first switching element SW1-1 is controlled to supply the external power applied from the input terminal "in" to the first power conversion unit 12. The first switching element SW1-1 in an ON state supplies the external power to the first power conversion unit 12. The first switching element SW1-1 in an OFF state stops the supply of the external power to the first power conversion unit 12. The ON/OFF operations of the first switching element SW1-1 may be controlled by the control unit 17.

The first power conversion unit 12 is connected between the first switching element SW1-1 and a first node N1, and converts received external power to a first DC power and outputs the first DC power to the first node N1. In other words, the first power conversion unit 12 may be a rectifier or a converter for converting AC to DC. During the conversion to the first DC power, the first power conversion unit 12 makes a voltage that may be used for charging the battery 15.

The second power conversion unit 13 is connected between the first node N1 and the second switching element SW1-2. The second power conversion unit 13 converts the DC power from the first power conversion unit 12 or the electric energy stored in the battery 15 to a first AC power and outputs the first AC power. In other words, the second power conversion unit 13 may be an inverter for converting DC to AC. During the conversion to the first AC power, the second power conversion unit 13 makes a voltage that may be used by the load. Alternatively, the second power conversion unit 13 may make a feature, such as an amplitude or phase, of the first AC power that is output substantially the same as that of the external power.

The second switching element SW1-2 controls so that the first AC power output from the second power conversion unit 13 is supplied to the output terminal "out". The second switching element SW1-2 in an ON state supplies the first AC power to the output terminal "out". The second switching element SW1-2 in an OFF state stops the supply of the first AC power to the output terminal "out". The ON/OFF operations of the second switching element SW1-2 may be controlled by the control unit 17.

The battery pack 14 stores electric energy and supplies the electric energy to the load for emergency situations. In the present invention, an emergency situation may be divided into a first emergency situation and a second emergency situation. The first emergency situation is a case in which a blackout is caused by a malfunction of the external power source. The second emergency situation is a case when a load power exceeds a supplied power due to an abrupt change in the load for a particular time period. The particular time period may be a time period between noon to 2 p.m. in the summer season and a time period between 10 p.m. to midnight in the winter season, or a time period between July to August in the summer season and a time period between December to February in the winter season. The particular time period is not limited to the above examples.

The battery pack 14 includes the battery 15, the BMS 16, a third switching element SW2-1, and a fourth switching element SW2-2.

The battery 15 is a rechargeable secondary battery. The battery 15 may be formed by serially and/or parallelly connecting a plurality of battery cells, or by serially and/or parallelly connecting battery modules, each battery module including a plurality of battery cells. Since the battery 15 supplies electric energy to the load when an emergency situation occurs, a battery cell exhibiting a large capacity characteristic may be used as the battery cell. The battery 15 may include at least one battery cell. The battery 15 may be a rechargeable secondary battery such as a nickel-cadmium battery, a nickel metal hydride (NiMH) battery, a lithium ion battery, and a lithium polymer battery.

In the present invention, the battery 15 may be used by being divided into a first battery group 15-1 and a second battery group 15-2. The first battery group 15-1 may include at least one battery and the second battery group 15-2 may include at least one battery. Also, when N-number of batteries exist, at least one battery may be selected as the first battery group 15-1 and the other batteries may be selected as the second battery group 15-2. The first battery group 15-1 and the second battery group 15-2 may operate in different modes according to an emergency situation.

Also, in the present invention, the battery 15 may be defined as a first dynamic battery group and a second dynamic battery group. The first dynamic battery group is defined as the first battery group 15-1 or the second battery group 15-2 operating in the power supply mode and the second dynamic battery group is defined as the first battery group 15-1 or the second battery group 15-2 operating in the standby mode.

The control unit 17 may assign the battery 15 to one of the first and second dynamic battery groups variously according to a type of an emergency situation, a state of charge (SOC) of a battery, a frequency that a battery group operates in the power supply mode, or a temperature of a battery. Also, the control unit 17 may change assignment of the first or second dynamic battery group during the operation of the power supply apparatus 1.

For example, when the first emergency situation occurs, the first battery group 15-1 may be assigned to a first dynamic battery group to operate in a power supply mode and the second battery group 15-2 may be assigned to a second dynamic battery group to operate in a standby mode. Under the first emergency situation, the first battery group 15-1 may supply the stored electric energy to the load. When the first emergency situation is finished, the first battery group 15-1 is recharged with electric energy.

Also, when the second emergency situation occurs, the second battery group 15-2 may be assigned to the first dynamic battery group to operate in the power supply mode and the first battery group 15-1 may be assigned to the second dynamic battery group to operate in the standby mode. Under the second emergency situation, the second battery group 15-2 may supply the stored electric energy to the load. Alternatively, under the second emergency situation, the external power from the input terminal "in" may be transferred to the output terminal "out" via the bypass circuit 11 and simultaneously the electric energy stored in the second battery group 15-2 may be supplied to the load. When the second emergency situation is finished, the second battery group 15-2 is recharged with electric energy.

For another example, when a first emergency situation and a second emergency situation are set to be a first cycle, the operation of the battery group 15 in the first cycle and in a second cycle is as follows.

When the first emergency situation of the first cycle occurs, the first battery group 15-1 may be assigned to the first dynamic battery group and the second battery group 15-2 may be assigned to the second dynamic battery group. When the second emergency situation of the first cycle occurs, the second battery group 15-2 may be assigned to the first dynamic battery group and the first battery group 15-1 may be assigned to the second dynamic battery group.

When the first or second emergency situation corresponding to the second cycle occurs during which the power supply apparatus 1 normally operates after the emergency situation of the first cycle is finished, if the first emergency situation of the second cycle occurs, the second battery group 15-2 may be assigned to the first dynamic battery group and the first battery group 15-1 may be assigned to the second dynamic battery group. Also, if the second emergency situation of the second cycle occurs, the first battery group 15-1 may be assigned to the first dynamic battery group and the second battery group 15-2 may be assigned to the second battery group 15-2.

Also, when the supply amount of the electric energy stored in the first battery group 15-1 or the second battery group 15-2 assigned to the first dynamic battery group under an emergency situation is insufficient, the electric energy stored in the second battery group 15-2 or the first battery group 15-1 operating in the standby mode may be supplied instead to the load. In one embodiment, while the electric energy stored in the second battery group 15-2 is supplied to the load, the first battery group 15-1 may be recharged.

While the electric energy stored in the first battery group 15-1 or the second battery group 15-2 assigned to the first dynamic battery group is supplied to the load, the second battery group 15-2 or the first battery group 15-1 assigned to the second dynamic battery group may be recharged.

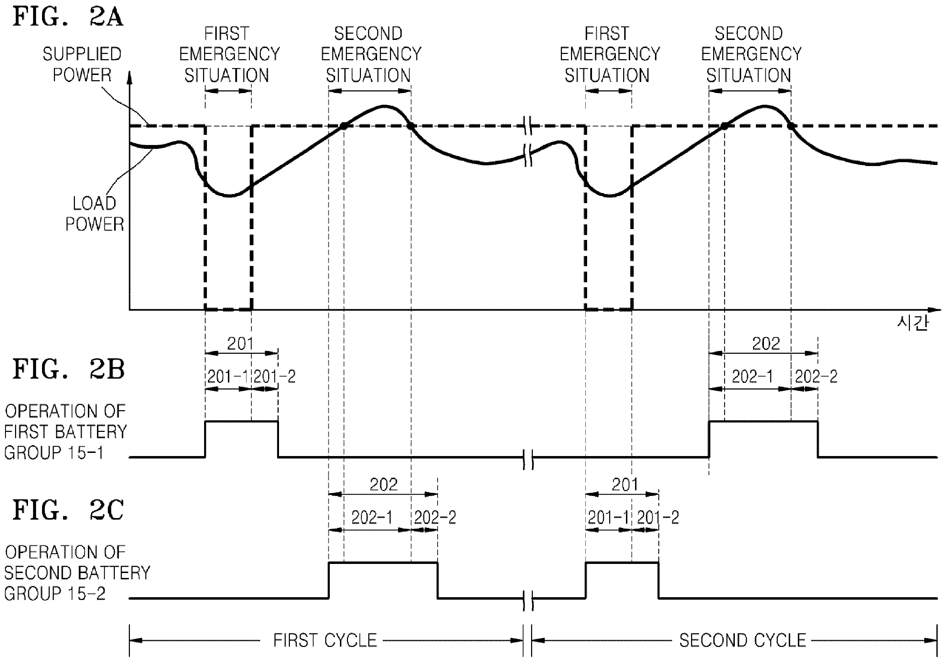

FIGS. 2A to 2C are views illustrating operational states of the power supply apparatus 1 according to a change in power, including the first and second cycles, in which FIG. 2A illustrates a supplied power and a load power, FIG. 2B illustrates an operational state of the first battery group 15-1 under an emergency situation, and FIG. 2C illustrates an operational state of the second battery group 15-2 under an emergency situation. Although FIGS. 2A to 2C illustrates that a first emergency situation first occurs in the first and second cycles and a second emergency situation occurs later, the present invention is not limited thereto so that the second emergency situation may first occur and the second emergency situation may occur later. Also, the same emergency situation may occur in a plurality of times in the same single cycle.

First, the operations of the first battery group 15-1 and the second battery group 15-2 when the first or second emergency situation of the first cycle occurs are described below.

When the first emergency situation of the first cycle occurs, the first battery group 15-1 assigned to the first dynamic battery group operates in the power supply mode and the second battery group 15-2 assigned to the second dynamic battery group operates in the standby mode. In FIG. 2B, a section 201 of the first battery group 15-1 is a section in which a blackout occurs and the power supply apparatus 1 is returned to a normal state. The section 201 may be divided into a section 201-1 and a section 201-2. The section 201-1 is a section in which a blackout actually occurs and the section 201-2 is a section in which the blackout is finished and the power supply apparatus 1 is returned to a normal state. In FIG. 2B, the supply of power by the first battery group 15-1 may not be finished instantly when the section 201-1 ends, and may be gradually decreased until the power supply apparatus 1 is returned to a normal state or maintained for a predetermined time, in the section 201-2.When the second emergency situation of the first cycle occurs, the second battery group 15-2 assigned to the first dynamic battery group operates in the power supply mode and the first battery group 15-1 assigned to the second dynamic battery group operates in the standby mode. In FIG. 2C, a section 202 of the second battery group 15-2 is a section in which the power needed for a load in the second emergency situation is returned to a normal state and thus the power supply apparatus 1 operates in the normal state. The section 202 may be divided into a section 202-1 and a section 202-2. The section 202-1 is a section from a time point when a blackout is caused because the load power exceeds the supplied power due to an abrupt change in the load in a particular time period to a time point when the load power is returned to a normal state. In this case, a time point of the section 202, that is, a time point when the second emergency situation occurs, may be a time point when the supplied power matches the load power as illustrated in FIG. 2A or a time point before the time point when the supplied power matches the load power. The section 202-2 is a section in which the power supply apparatus 1 is returned to the normal state after the load power is returned to the normal state. In FIG. 2C, the supply of power by the second battery group 15-2 may not be finished instantly when the section 202-1 ends, and may be gradually decreased until the power supply apparatus 1 is returned to the normal state or maintained for a predetermined time, in the section 202-2.

Next, the operations of the first and second battery groups 15-1 and 15-2 when the first or second emergency situation of the second cycle occurs are described below.

Unlike the first cycle, when the first emergency situation of the second cycle occurs, the second battery group 15-2 assigned to the first dynamic battery group operates in the power supply mode and the first battery group 15-1 assigned to the second dynamic battery group operates in the standby mode. Also, when the second emergency situation of the second cycle occurs, the first battery group 15-1 assigned to the first dynamic battery group operates in the power supply mode and the second battery group 15-2 assigned to the second dynamic battery group operates in the standby mode.

The reason for switching the assignment of the first and second dynamic battery groups when the emergency situations of the first and second cycles occur is to prevent imbalance in the battery groups caused by the continuous operation of any one battery group in the power supply mode or the standby mode. In another embodiment, the assignment of the first and second battery groups may be determined based o the following standard.

When the first or second emergency situation occurs, states of charge (SOC) stored in the first and second battery groups 15-1 and 15-2 are compared with each other. According to a result of the comparison, any one of the first and second battery groups 15-1 and 15-2 having a larger SOC may be assigned to the first dynamic battery group and one having a smaller SOC may be assigned to the second dynamic battery group. When the SOCs of the first and second battery groups 15-1 and 15-2 are the same, as described above, the assignment of the first and second dynamic battery groups may be determined according to the type of an emergency situation. The measurement and comparison of the SOCs of the first and second battery groups 15-1 and 15-2 are performed by the BMS 16 that is described later.

Also, when the first or second emergency situation occurs, the frequencies that the first and second battery groups 15-1 and 15-2 operate as the first dynamic battery group during a previous emergency situation are determined. Then, any one of the first and second battery groups 15-1 and 15-2 having a less frequency of operating as the first dynamic battery group may be assigned to the first dynamic battery group, whereas the other battery group may be assigned to the second dynamic battery group.

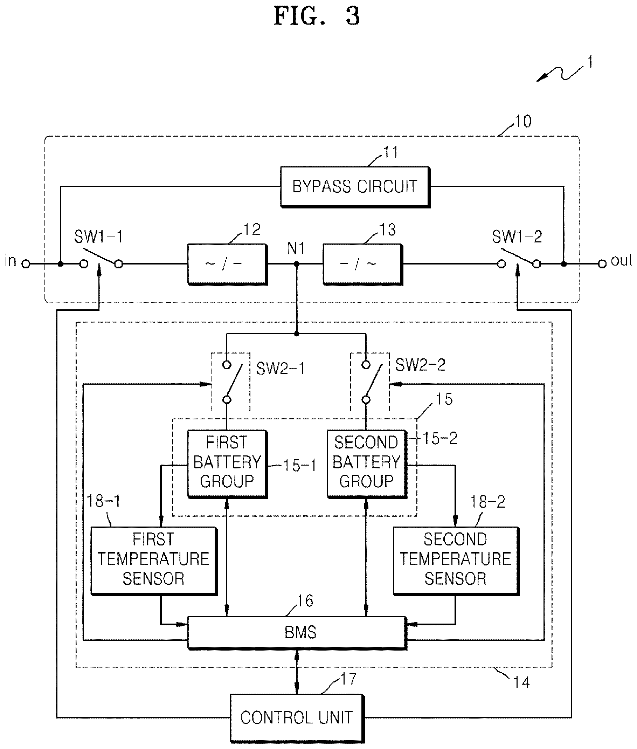

Also, when the first or second emergency situation occurs, a current temperature and a reference temperature of the first and second battery groups 15-1 and 15-2 are compared with each other. Then, any one of the first and second battery groups 15-1 and 15-2 having a lower temperature may be assigned to the first dynamic battery group, whereas the other battery group may be assigned to the second dynamic battery group. In order to measure the temperatures of the first and second battery groups 15-1 and 15-2, a first temperature sensor 18-1 and a second temperature sensor 18-2 may be included as illustrated in FIG. 3. The first and second temperature sensors 18-1 and 18-2 may be thermistors, but not limited thereto.

The third switching element SW2-1 connected between the first node N1 and the first battery group 15-1 may store electric energy in the first battery group 15-1 or output electric energy from the first battery group 15-1. The third switching element SW2-1 is in an ON state under the first emergency situation and supplies the electric energy stored in the first battery group 15-1 to the second power conversion unit 13. After the first emergency situation is finished, the third switching element SW2-1 may be switched to an OFF state and then switched back to the ON state. When the third switching element SW2-1 is switched back to the ON state, the first battery group 15-1 may be recharged with the first DC power from the first power conversion unit 12. The ON/OFF operations of the third switching element SW2-1 may be controlled by the BMS 16.

The fourth switching element SW2-2 connected between the first node N1 and the second battery group 15-2 may store electric energy in the second battery group 15-2 or output electric energy from the second battery group 15-2. The fourth switching element SW2-2 is exemplarily in an ON state under the second emergency situation and supplies the electric energy stored in the second battery group 15-2 to the second power conversion unit 13. After the second emergency situation is finished, the fourth switching element SW2-2 is in an ON state so that the first battery group 15-1 may be recharged with the first DC power from the first power conversion unit 12. The ON/OFF operations of the fourth switching element SW2-2 may be controlled by the BMS 16.

The BMS 16 controls charge and discharge of the battery 15. In other words, the BMS 16 operates as a protection circuit. The BMS 16 may include an analog front end (AFE) (not shown) for sensing a voltage, a current, and a temperature of the battery 15, and a microcomputer (not shown) for controlling an operation of the AFE and transferring data to the control unit 17 or an external monitoring apparatus (not shown). The BMS 16 performs a sensing operation and a communication operation not only when the battery 15 performs a charge or discharge operation but also in a normal state.

Also, the BMS 16 outputs a switching control signal for switching the third switching element SW2-1 or the fourth switching element SW2-2 according to the type of emergency situation. As described above, when receiving generation of the first emergency situation from the control unit 17, the BMS 16 may output a control signal to turn the third switching element SW2-1 on. When receiving generation of the second emergency situation from the control unit 17, the BMS 16 may output a control signal to turn the fourth switching element SW2-2 on. Also, when receiving termination of the first or second emergency situation from the control unit 17, the BMS 16 may turn the third or fourth switching element SW2-1 or SW2-2 on to charge the first or second battery group 15-1 or 15-2.

Furthermore, in the present embodiment, the BMS 16 may output a switching control signal for switching the third or fourth switching element SW2-1 or SW2-2 by measuring and comparing the SOCs of the first and second battery groups 15-1 and 15-2, measuring the frequency of operations as the first dynamic battery group in a previous emergency situation, or comparing the measured temperatures of the first and second battery groups 15-1 and 15-2 with each other. The BMS 16 may simultaneously turn the third and fourth switching elements SW2-1 and SW2-2 on or off, or turn one switching element on while turning the other switching element off.

The control unit 17 controls an operation of each of the elements of the power supply apparatus 1. The controller 17 controls the ON/OFF operations of the first and second switching elements SW1-1 and SW1-2. In detail, when the remaining amount of the battery 15 is small, the control unit 17 supplies electric power by turning the first switching element SW1-1 on to charge the battery 15. When an emergency situation occurs, the control unit 17 turns the second switching element SW1-2 on so that the electric energy stored in the battery 15 may be supplied to the load.

The control unit 17 senses an abnormal state of the external power source and, when an emergency situation occurs, controls the power supply apparatus 1 to operate as an uninterruptible power supply (UPS). In other words, the control unit 17 controls the external power to be transferred to the load in a normal state in which the external power source supplies electric power to the load, and controls the power supply circuit 10 to generate an operation power of the BMS 16 by using the external power. Also, when a blackout is caused by a malfunction of the external power source or an overload is generated as supplied power exceeds a maximum supplied power for a particular time period, the control unit 17 controls the power supply circuit 10 to generate electric power to be supplied to the load and the operation power of the BMS 16 by using the electric energy stored in the battery 15.

A method of supplying an operation power of the BMS 16 in the power supply apparatus 1 according to the present embodiment is described below.

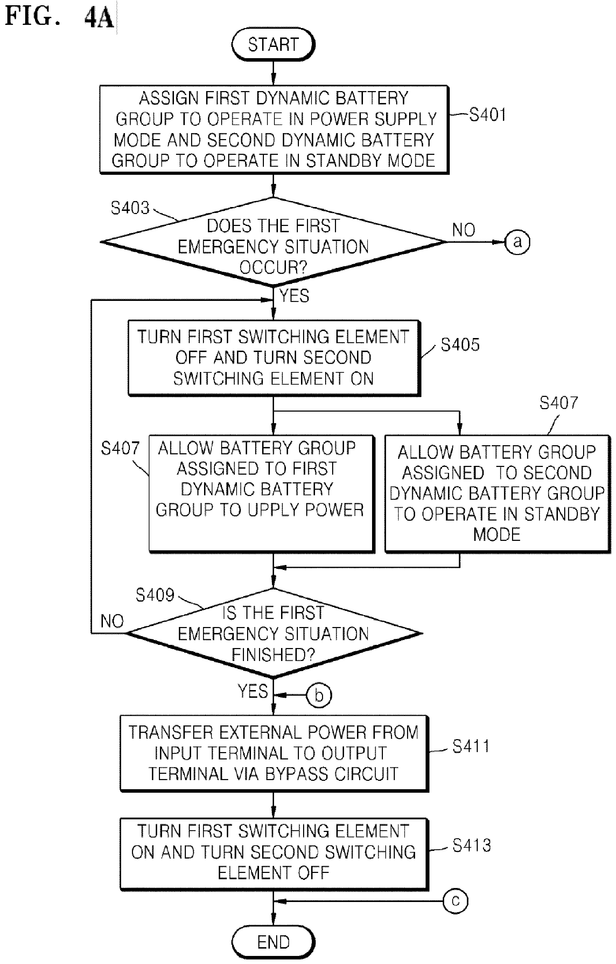

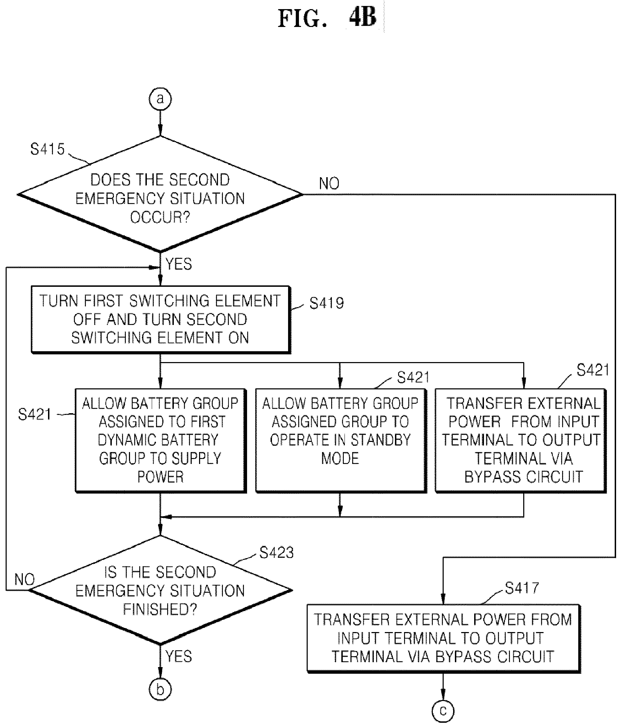

FIG. 4A/B is a flowchart showing a method of controlling the power supply apparatus 1, according to an embodiment of the present invention.

Referring to FIG. 4A/B, the control unit 17 selects at least one of a plurality batteries as the first battery group 15-1 and the other batteries as the second battery group 15-2, and then assigns the first dynamic battery group to operate in the power supply mode and the second dynamic battery group to operate in the standby mode (S401).

When the assignment of the first and second dynamic battery groups is completed, the control unit 17 may determine whether the first emergency situation occurs in which a blackout is caused due to the malfunction of the external power or overload (S403).

When the first emergency situation occurs, the control unit 17 turns the first switching element SW1-1 off and the second switching element SW1-2 on (S405). When the first switching element SW1-1 is turned off and the second switching element SW1-2 is turned on, the electric energy stored in the battery 15 is output to the output terminal "out" via the second power conversion unit 13. Also, the control unit 17 controls the BMS 16 to operate the battery 15 in the power supply mode and the standby mode.

When the first emergency situation occurs, the BMS 16 under the control of the control unit 17 turns the third switching element SW2-1 on and the fourth switching element SW2-2 off so that the first battery group 15-1 or the second battery group 15-2 assigned to the first dynamic battery group may supply power and the first battery group 15-1 or the second battery group 15-2 assigned to the second dynamic battery group may operate in the standby mode (S407). For example, when the first battery group 15-1 is assigned to the first dynamic battery group, the electric energy stored in the first battery group 15-1 is converted to the first AC power by the second power conversion unit 13 and then is output to the output terminal "out".

Then, the control unit 17 determines whether the first emergency situation is finished (S409). In other words, the control unit 17 determines whether the external power source is in a normal state and is switched to a state of supplying the external power to the load or normally supplying the load power.

When the first emergency situation is finished, the control unit 17 transfers the external power from the input terminal "in" to the output terminal "out" via the bypass circuit 11 (S411).

Thereafter, the control unit 17 turns the first switching element SW1-1 on and the second switching element SW1-2 off (S413). When the first switching element SW1-1 is turned on and the second switching element SW1-2 is turned off, the external power from the input terminal "in" is converted to the first DC power by the first power conversion unit 12 and then is used to recharge the first battery group 15-1. In this state, the third switching element SW2-1 is turned on.

In the present embodiment, operations S411 and S413 may be simultaneously performed. In other words, when the first emergency situation is finished, the external power from the input terminal "in" is transferred to the output terminal "out" via the bypass circuit 11, and simultaneously, the power supply apparatus 1 is returned to a normal state. In this state, the control unit 17 turns the first switching element SW1-1 on and the second switching element SW1-2 off so that the external power from the input terminal "in" is converted to the first DC power by the first power conversion unit 12. Accordingly, the first battery group 15-1 or the second battery group 15-2 assigned to the first dynamic battery group may be recharged with the first DC power.

When the external power source is in a normal state and the external power is supplied to the load, the control unit 17 determines whether the second emergency situation occurs, which is a case just before a blackout is caused because a load power exceeds a supplied power due to an abrupt change in the load in a particular time period (S415).

When the first and second emergency situations do not occur, the control unit 17 transfers the external power from the input terminal "in" to the output terminal "out" via the bypass circuit 11 (S417).

However, when the second emergency situation occurs, the control unit 17 turns the first switching element SW1-1 off and the second switching element SW1-2 on (S419). When the first switching element SW1-1 is turned off and the second switching element SW1-2 is turned on, the electric energy stored in the battery 15 is output to the output terminal "out" via the second power conversion unit 13. Also, the control unit 17 controls the BMS 16 to operate the battery groups in the power supply mode and the standby mode.

When the second emergency situation occurs, the BMS 16 under the control of the control unit 17 turns the third switching element SW2-1 off and the fourth switching element SW2-2 on so that the first battery group 15-1 or the second battery group 15-2 assigned to the first dynamic battery group may supply power and the first battery group 15-1 or the second battery group 15-2 assigned to the second dynamic battery group may operate in the standby mode while the external power from the input terminal "in" may be transferred to the output terminal "out" via the bypass circuit 11 (S421). For example, when the second battery group 15-2 is assigned to the first dynamic battery group, the electric energy stored in the second battery group 15-2 is converted to the first AC power by the second power conversion unit 13 and then is output to the output terminal "out" and simultaneously the external power from the input terminal "in" may be output to the output terminal "out" via the bypass circuit 11.

Then, the control unit 17 determines whether the second emergency situation is finished (S423). In other words, the control unit 17 determines whether the external power source is in a normal state and is switched to a state of supplying the external power to the load.

When the second emergency situation is finished, the control unit 17 turns the first switching element SW1-1 and the second switching element SW1-2 off, transfers the external power from the input terminal "in" to the output terminal "out" via the bypass circuit 11, and then, turns the first switching element SW1-1 on and the second switching element SW1-2 off. Accordingly, operations S411 and S413 in which the second battery group 15-2 is recharged are performed. Also, operations S411 and S413 may be simultaneously performed. Since the subsequent processes have already been described above, detailed descriptions thereof are omitted herein.

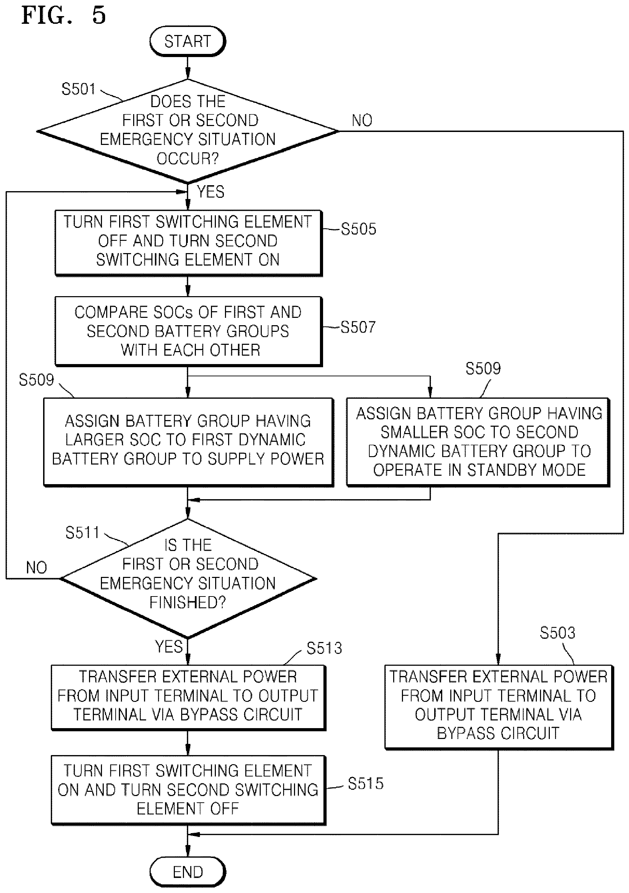

FIG. 5 is a flowchart showing a method of controlling the power supply apparatus 1, according to another embodiment of the present invention.

Referring to FIG. 5, the control unit 17 determines whether the first or second emergency situation occurs (S501).

When the first or second emergency situation does not occur, the control unit 17 transfers the external power from the input terminal "in" to the output terminal "out" via the bypass circuit 11 (S503). When the first or second emergency situation occurs, the control unit 17 turns the first switching element SW1-1 off and the second switching element SW1-2 on (S505). When the first switching element SW1-1 is turned off and the second switching element SW1-2 is turned on, the electric energy stored in the battery 15 is output to the output terminal "out" via the second power conversion unit 13. Also, the control unit 17 controls the BMS 16 to operate the battery groups in the power supply mode and the standby mode.

When the first or second emergency situation occurs, the BMS 16 under the control of the control unit 17 checks and compares the SOCs of the first and second battery groups 15-1 and 15-2 with each other (S507).

The controller receiving a result of the comparison from the BMS 16 assigns any one of the first and second battery groups 15-1 and 15-2 having a larger SOC to the first dynamic battery group to supply power and one having a smaller SOC to the second dynamic battery group to operate in the standby mode (S509). The third or fourth switching element SW2-1 or SW2-2 to operate in the power supply mode is turned on. The electric energy stored in the first or second battery group 15-1 or 15-2 assigned to the first dynamic battery group is converted to the first AC power by the second power conversion unit 13 and is output to the output terminal "out". As a result of the comparison, when the SOCs of the first and second battery groups 15-1 and 15-2 are the same, as illustrated in FIG. 3, any one of the first and second dynamic battery groups 15-1 and 15-2 may be assigned to the first dynamic battery group according to the type of an emergency situation.

Then, the control unit 17 determines whether the first or second emergency situation is finished (S511). In other words, the control unit 17 determines whether the external power source is in a normal state and the external power is supplied to the load.

When the first or second emergency situation is finished, the control unit 17 transfers the external power from the input unit "in" to the output terminal "out" via the bypass circuit 11 (S513).

After transferring the external power from the input unit "in" to the output terminal "out" via the bypass circuit 11, the control unit 17 turns the first switching element SW1-1 on and the second switching element SW1-2 off (S515). When the first switching element SW1-1 is turned on and the second switching element SW1-2 is turned off, the external power from the input unit "in" is converted to the first DC power by the first power conversion unit 12 and is used to recharge the first or second battery group 15-1 or 15-2 operating as the first dynamic battery group.

In the present embodiment, operations S513 and S515 may be simultaneously performed. In other words, when the emergency situation is finished, the power supply apparatus 1 is returned to a normal state. In this state, the control unit 17 transfers the external power from the input unit "in" to the output terminal "out" via the bypass circuit 11, and simultaneously, turns the first switching element SW1-1 on and the second switching element SW1-2 off, so that the external power from the input terminal "in" may be converted to the first DC power by the first power conversion unit 12 and then used to recharge the battery group operating in the power supply mode.

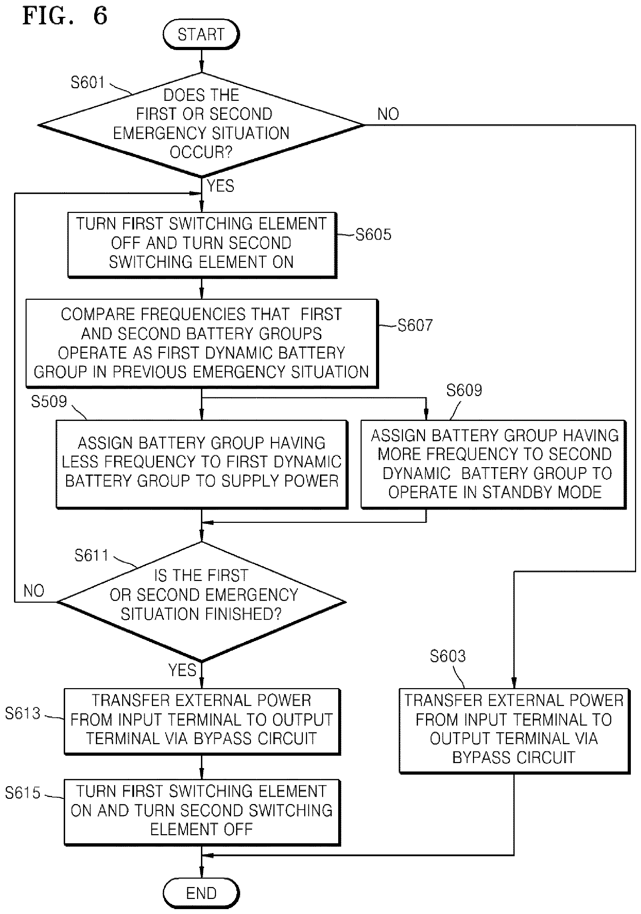

FIG. 6 is a flowchart showing a method of controlling the power supply apparatus 1, according to another embodiment of the present invention.

Referring to FIG. 6, the control unit 17 determines whether the first or second emergency situation occurs (S601).

When the first or second emergency situation does not occur, the control unit 17 transfers the external power from the input terminal "in" to the output terminal "out" via the bypass circuit 11 (S603).

However, when the first or second emergency situation occurs, the control unit 17 turns the first switching element SW1-1 off and the second switching element SW1-2 on (S605). When the first switching element SW1-1 is turned off and the second switching element SW1-2 is turned on, the electric energy stored in the battery 15 is output to the output terminal "out" via the second power conversion unit 13. Also, the control unit 17 controls the BMS 16 to operate the battery groups in the power supply mode and the standby mode.

When the first or second emergency situation occurs, the BMS 16 under the control of the control unit 17 compares the frequencies that the first and second battery groups 15-1 and 15-2 operate as the first dynamic battery group during a previous emergency situation (S607). The frequencies may be determined by the number or count of use of a specific battery group 15-1 or 15-2 as a first or second dynamic battery group.

The control unit 17 assigns any one of the first and second battery groups 15-1 and 15-2 having a lower frequency of operating as the first dynamic battery group during a previous emergency situation to the first dynamic battery group to supply power and one having a higher frequency of operating as the first dynamic battery group to the second dynamic battery group to operate in the standby mode(S609). The third or fourth switching element SW2-1 or SW2-2 to operate in the power supply mode is turned on. When the frequencies that the first and second battery groups 15-1 and 15-2 operate as the first dynamic battery group during a previous emergency situation are the same as a result of the comparison, as illustrated in FIG. 3, any one of the first and second battery groups 15-1 and 15-2 may be assigned to the first dynamic battery group according to the type of an emergency situation. The electric energy stored in the first or second battery group 15-1 or 15-2 assigned to the first dynamic battery group is converted to the first AC power by the second power conversion unit 13 and is output to the output terminal "out".

Then, the control unit 17 determines whether the first or second emergency situation is finished (S611). In other words, the control unit 17 determines whether the external power source is in a normal state and the external power is supplied to the load.

When the first or second emergency situation is finished, the control unit 17 transfers the external power from the input unit "in" to the output terminal "out" via the bypass circuit 11 (S613).

After transferring the external power from the input unit "in" to the output terminal "out" via the bypass circuit 11, the control unit 17 turns the first switching element SW1-1 on and the second switching element SW1-2 off (S615). When the first switching element SW1-1 is turned on and the second switching element SW1-2 is turned off, the external power from the input unit "in" is converted to the first DC power by the first power conversion unit 12 and is used to recharge the battery group operating in the power supply mode.

In the present embodiment, operations S613 and S615 may be simultaneously performed. In other words, when the emergency situation is finished, the power supply apparatus 1 is returned to a normal state. In this state, the control unit 17 transfers the external power from the input unit "in" to the output terminal "out" via the bypass circuit 11, and simultaneously, turns the first switching element SW1-1 on and the second switching element SW1-2 off, so that the external power from the input terminal "in" may be converted to the first DC power by the first power conversion unit 12 and then used to recharge the battery group operating in the power supply mode.

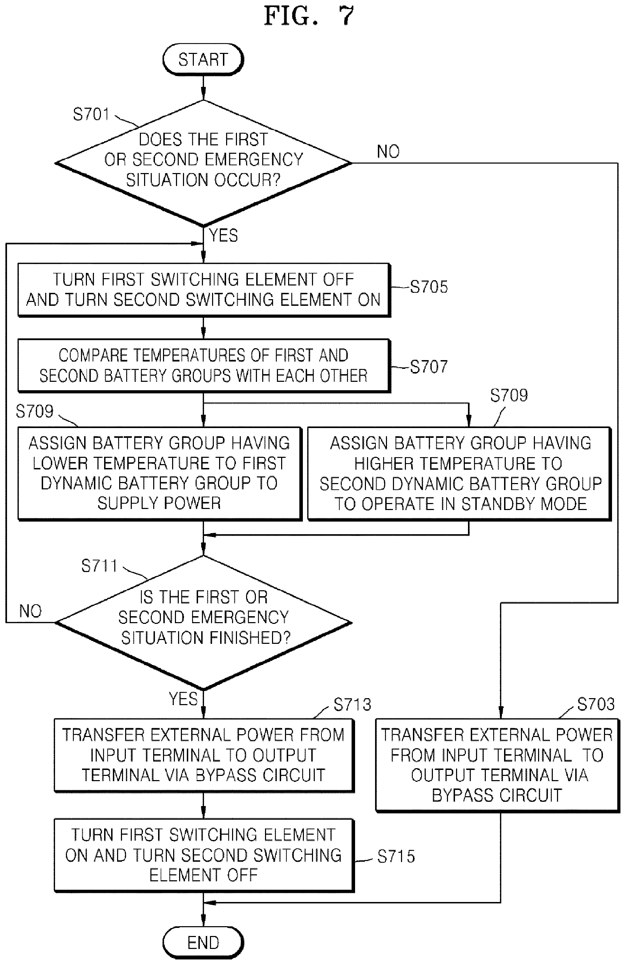

FIG. 7 is a flowchart showing a method of controlling the power supply apparatus 1, according to another embodiment of the present invention.

Referring to FIG. 7, the control unit 17 determines whether the first or second emergency situation occurs (S701).

When the first or second emergency situation does not occur, the control unit 17 transfers the external power from the input terminal "in" to the output terminal "out" via the bypass circuit 11 (S703).

However, when the first or second emergency situation occurs, the control unit 17 turns the first switching element SW1-1 off and the second switching element SW1-2 on (S705).

When the first switching element SW1-1 is turned off and the second switching element SW1-2 is turned on, the electric energy stored in the battery 15 is output to the output terminal "out" via the second power conversion unit 13. Also, the control unit 17 controls the BMS 16 to operate the battery groups in the power supply mode and the standby mode.

When the first or second emergency situation occurs, the BMS 16 under the control of the control unit 17 compares the temperatures of the first and second battery groups 15-1 and 15-2 (S707).

The control unit 17 receiving a result of the comparison from the BMS 16 assigns any one of the first and second battery groups 15-1 and 15-2 having a lower temperature to the first dynamic battery group to supply power and one having a higher temperature to the second dynamic battery group to operate in the standby mode (S709). The third or fourth switching element SW2-1 or SW2-2 to operate in the power supply mode is turned on. When the temperatures of the first and second battery groups 15-1 and 15-2 are the same as a result of the comparison, as illustrated in FIG. 3, any one of the first and second battery groups 15-1 and 15-2 may be assigned to the first dynamic battery group according to the type of an emergency situation. The electric energy stored in the first or second battery group 15-1 or 15-2 assigned to the first dynamic battery group is converted to the first AC power by the second power conversion unit 13 and is output to the output terminal "out".

Then, the control unit 17 determines whether the first or second emergency situation is finished (S711). In other words, the control unit 17 determines whether the external power source is in a normal state and the external power is supplied to the load.

When the first or second emergency situation is finished, the control unit 17 transfers the external power from the input unit "in" to the output terminal "out" via the bypass circuit 11 (S713).

After transferring the external power from the input unit "in" to the output terminal "out" via the bypass circuit 11, the control unit 17 turns the first switching element SW1-1 on and the second switching element SW1-2 off (S715). When the first switching element SW1-1 is turned on and the second switching element SW1-2 is turned off, the external power from the input unit "in" is converted to the first DC power by the first power conversion unit 12 and is used to recharge the battery group 15-1 operating in the power supply mode.

In the present embodiment, operations S713 and S715 may be simultaneously performed. In other words, when the emergency situation is finished, the power supply apparatus 1 is returned to a normal state. In this state, the control unit 17 transfers the external power from the input unit "in" to the output terminal "out" via the bypass circuit 11, and simultaneously, turns the first switching element SW1-1 on and the second switching element SW1-2 off, so that the external power from the input terminal "in" may be converted to the first DC power by the first power conversion unit 12 and then used to recharge the battery group operating in the power supply mode.

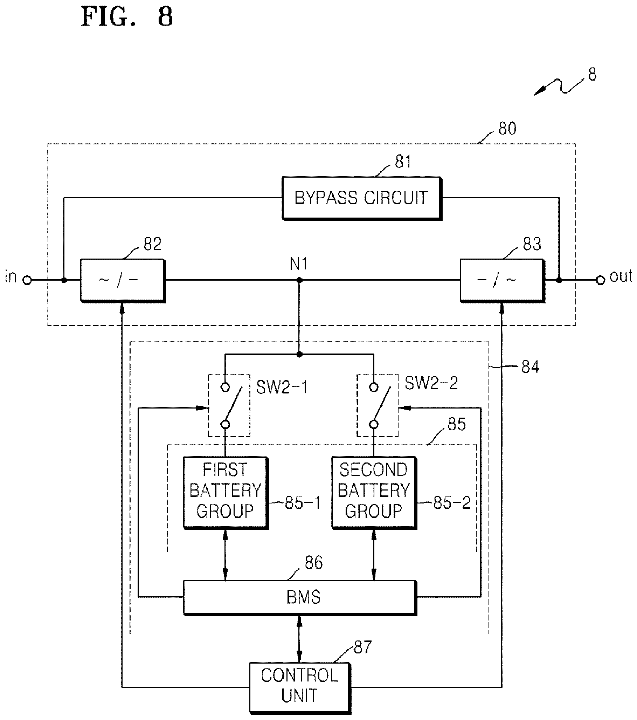

FIG. 8 is a block diagram illustrating a power supply apparatus 8 according to another embodiment of the present invention.

Referring to FIG. 8, the power supply apparatus 8 according to the present embodiment includes a power supply circuit 80, a battery pack 84, and a control unit 87. Also, the power supply apparatus 8 includes an input terminal "in" and an output terminal "out".

The power supply circuit 80 according to the present embodiment includes a bypass circuit 81, a first power conversion unit 82, and a second power conversion unit 83. In other words, the power supply circuit 80 is substantially the same as the power supply circuit 10 of FIG. 1 where the switching elements are removed. The control unit 87 controls the operations of the first and second power conversion units 82 and 83 instead of controlling the ON/OFF of the switching elements and, if necessary, controls the power applied to input terminals of the first and second power conversion units 82 and 83 to be converted to AC or DC and output to output terminals thereof.

When a battery 85 needs to be recharged due to an insufficient remaining capacity, the control unit 87 controls the first power conversion unit 82 to supply a first DC power to the battery 85. Also, when an emergency situation occurs, the control unit 87 controls the second power conversion unit 83 to generate power to be supplied to a load and an operation power of a BMS 86 by using electric energy stored in the battery 85. Also, although it is not illustrated in the drawing, the battery pack 114 may include a temperature sensor for measuring a temperature of the battery 115. Since the other elements are the same as those illustrated in FIG. 1, detailed descriptions thereof are omitted herein.

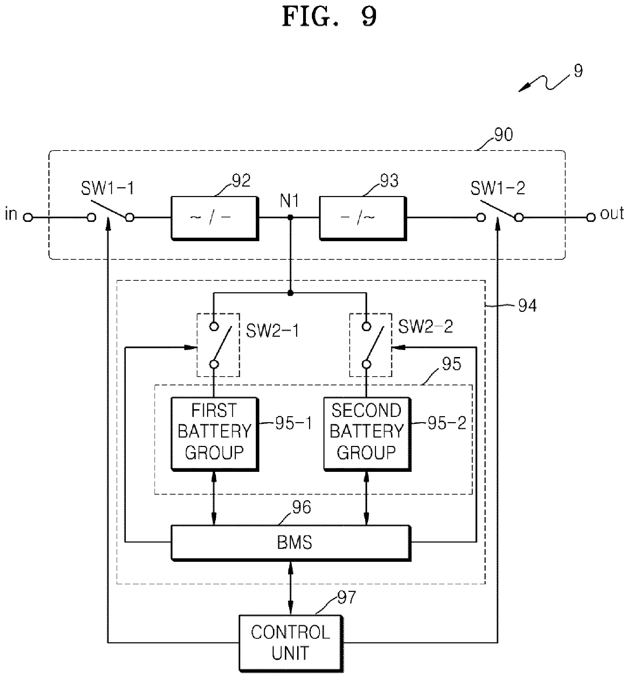

FIG. 9 is a block diagram illustrating a power supply apparatus 9 according to another embodiment of the present invention.

Referring to FIG. 9, the power supply apparatus 9 according to the present embodiment includes a power supply circuit 90, a battery pack 94, and a control unit 97. Also, the power supply apparatus 9 includes an input terminal "in" and an output terminal "out".

The power supply circuit 90 according to the present embodiment includes a first power conversion unit 92, and a second power conversion unit 93. In other words, the power supply circuit 90 according to the present embodiment is substantially the same as the power supply circuit 10 of FIG. 1 where the bypass circuit 11 is removed. The control unit 97 controls the ON/OFF of the switching elements and the operations of the first and second power conversion units 92 and 93 and, if necessary, controls the power applied to input terminals of the first and second power conversion units 92 and 93 to be converted to AC or DC and output to output terminals thereof.

When a battery 95 needs to be recharged due to an insufficient remaining capacity, the control unit 97 controls the first power conversion unit 92 to operate by turning the first switching element SW1-1 on so that a first DC power may be supplied to the battery 95. Also, when an emergency situation occurs, the control unit 97 controls the second power conversion unit 93 to operate by turning the second switching element SW1-2 on so that power to be supplied to a load and an operation power of a BMS 96 may be generated by using electric energy stored in the battery 95. Also, in a normal state, the control unit 97 turns both of the first and second switching elements SW1-1 and SW1-2 on so as to transfer the external power from the input terminal "in" to the output terminal "out" via the first and second power conversion units 92 and 93. Also, although it is not illustrated in the drawing, the battery pack 114 may include a temperature sensor for measuring a temperature of the battery 115. Since the other elements are the same as those illustrated in FIG. 1, detailed descriptions thereof are omitted herein.

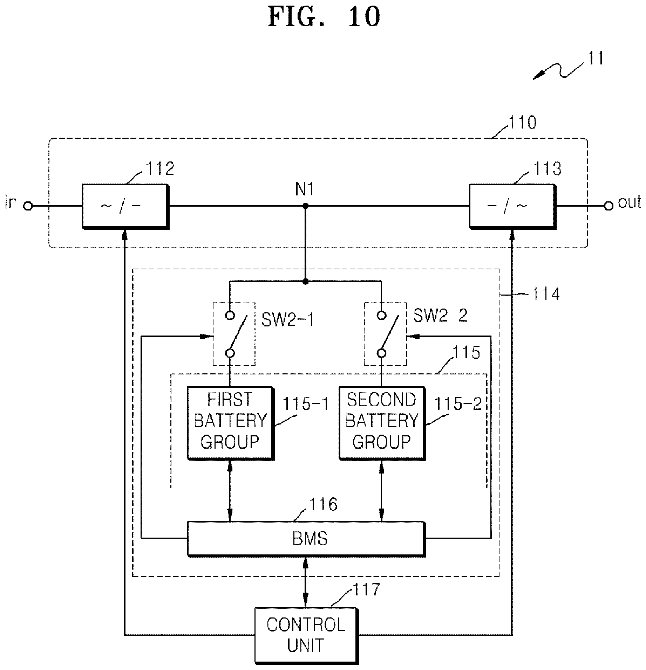

FIG. 10 is a block diagram illustrating a power supply apparatus 11 according to another embodiment of the present invention.

Referring to FIG. 10, the power supply apparatus 11 according to the present embodiment includes a power supply circuit 110, a battery pack 114, and a control unit 117. Also, the power supply apparatus 11 includes an input terminal "in" and an output terminal "out".

The power supply circuit 110 according to the present embodiment includes a first power conversion unit 112, and a second power conversion unit 113. In other words, the power supply circuit 110 according to the present embodiment is substantially the same as the power supply circuit 80 of FIG. 8 where the bypass circuit 81 is removed. The control unit 117 controls the operations of the first and second power conversion units 112 and 113 instead of controlling the ON/OFF of the switching elements and, if necessary, controls the power applied to input terminals of the first and second power conversion units 112 and 113 to be converted to AC or DC and output to output terminals thereof.

When a battery 115 needs to be recharged due to an insufficient remaining capacity, the control unit 117 controls the first power conversion unit 112 to operate so that a first DC power may be supplied to the battery 115. Also, when an emergency situation occurs, the control unit 117 controls the second power conversion unit 113 to operate so that power to be supplied to a load and an operation power of a BMS 116 may be generated by using electric energy stored in the battery 115. Also, in a normal state, the control unit 117 may transfer the external power from the input terminal "in" to the output terminal "out" via the first and second power conversion units 112 and 113. Also, although it is not illustrated in the drawing, the battery pack 114 may include a temperature sensor for measuring a temperature of the battery 115. Since the other elements are the same as those illustrated in FIG. 1, detailed descriptions thereof are omitted herein.

A program for executing the controlling methods according to the above-described embodiments and modified examples thereof in the power supply apparatuses 1, 8, 9, and 10 may be stored in a recording medium. The recording medium is, for example, a medium that may be read by a processor and a semiconductor recording medium, for example, a flash memory, may be used therefor. The medium may be read by a processor and executed by the processor.

While this invention has been particularly shown and described with reference to preferred embodiments thereof, it will be understood by those skilled in the art that various changes in form and details may be made therein without departing from the scope of the invention as defined by the appended claims. The preferred embodiments should be considered in descriptive sense only and not for purposes of limitation. Therefore, the scope of the invention is defined not by the detailed description of the invention but by the appended claims.

## Claims

1. A power supply apparatus (1) comprising:
an input terminal (IN) adapted to receive an external AC power;
an output terminal (OUT) adapted to output a first AC power,
a first power conversion unit (12) adapted to convert the received external AC power to a first DC power and outputs the first DC power;
a second power conversion unit (13) adapted to convert a DC power to a first AC power and outputs the first AC power to the output terminal (OUT);
a first node (N1) electrically connected between the output of the first power conversion unit (12) and the input of the second power conversion unit (13);
a control unit (17) adapted to control the operations of the first and second power conversion units (12, 13);
wherein a first and a second battery group (15-1, 15-2) are each connected to the control unit (17) and electrically connectable to first node (N1),
wherein the control unit (17) is adapted to dynamically allocate one of the first and the second battery group as a first dynamic battery group and the other of the first and the second battery group as a second dynamic battery group depending on a predetermined condition, wherein
the first dynamic battery group acts in a power supply mode, and the second dynamic battery group acts in a standby mode, **characterized by** a bypass circuit (11) electrically connected to the input terminal (IN) and the output terminal (OUT) to bypass the first and second power conversion units (12, 13),
wherein the predetermined condition corresponds to a second emergency situation, which corresponds to the case where a power for a load at the output terminal (OUT) of the power supply apparatus (1) exceeds the power at the input terminal (IN), and
wherein in the second emergency situation, the control unit (17) is adapted to control supply of the external AC power to the output terminal (OUT) of the power supply apparatus (1) in addition to the energy of the first dynamic battery group.

2. Power supply apparatus (1) according to claim 1, further comprising:
a first switching unit (SW1-1) connected between the input terminal (IN) of the power supply apparatus (1) and the input of the first power conversion unit (12), and
a second switching unit (SW1-2) electrically connected between the output of the second power conversion unit (13) and the output terminal (OUT) of the power supply apparatus,
wherein the control unit (17) is adapted to control the operation of the first and second switching elements (SW1-2, SW1-2).

3. Power supply apparatus (1) of any of the previous claims, further comprising:
a third switching unit (SW2-1) electrically connected on one end to the first node (N1) and on the other end to the first battery group (15-1), and
a fourth switching unit (SW2-2) electrically connected on one end to the first node (N1) and on the other end to the second battery group (15-2),
wherein the control unit (17) is adapted to control the operation of the third and fourth switching elements (SW2-1, SW2-2) such that the first dynamic battery group (15-1, 15-2) is connected to the first node (N1) and the second dynamic battery group is not connected to the first node (N1).

4. Power supply apparatus (1) of any of the previous claims, wherein the control unit (17) is adapted to determine:
a normal operation state, and
the predetermined condition corresponds to a first emergency situation, which corresponds to a blackout at the input terminal (IN).

5. Power supply apparatus (1) of claim 1 or 4, wherein upon the determination of an end of the first or second emergency situation, respectively, the control unit (17) is adapted to stop supplying energy of the first dynamic battery group (15-1, 15-2) and is adapted to electrically connect the input terminal (IN) to the respective first dynamic battery group (15-1, 15-2) to recharge the first dynamic battery group (15-1, 15-2).

6. Power supply apparatus (1) of any of the previous claims, wherein the control unit (17) is further adapted to compare a state of charge of the first and second battery groups (15-1, 15-2) such that the battery group (15-1, 15-2) with higher state of charge is used for power supply.

7. Power supply apparatus (1) of any of the previous claims, wherein the control unit (17) is further adapted to compare a number or count of use of the first and second battery groups (15-1, 15-2) as the first dynamic battery group such that the battery group (15-1, 15-2) with a lower number of use is used for power supply.

8. Power supply apparatus (1) of any of the previous claims, wherein the control unit (17) is further adapted to compare the temperature of the first and second battery groups (15-1, 15-2) such that the battery group (15-1, 15-2) with lower temperature is used for power supply.

9. Power supply apparatus (1) of any of the previous claims, wherein the control unit (17) is further adapted to control supply of the input external AC power to the output of the power supply apparatus (1) in a normal operation state.

10. Power supply apparatus (1) of any of the previous claims, further comprising a battery management system (16) adapted to control charging and discharging of the first and second battery group (15-1, 15-2), wherein the battery management system (16) is connected to the control unit (17).

11. Power supply apparatus (1) of any of the previous claims, further comprising a plurality of temperature sensors for measuring the temperature of the first and second battery group (15-1, 15-2).

12. Power supply apparatus (1) of any of the previous claims, wherein the control unit (17) is further adapted to change assignment of a first or second battery group (15-1, 15-2) to the first dynamic battery group if the electric energy stored in the assigned battery group (15-1, 15-2) falls below a required energy level.

## Patentansprüche

1. Stromversorgungsvorrichtung (1), umfassend:
einen Eingangsanschluss (IN), der so ausgelegt ist, dass er einen externen Wechselstrom erhält;
einen Ausgangsanschluss (OUT), der so ausgelegt ist, dass er einen ersten Wechselstrom ausgibt,
eine erste Stromrichteinheit (12), die so ausgelegt ist, dass sie den erhaltenen externen Wechselstrom in einen ersten Gleichstrom umwandelt und den ersten Gleichstrom ausgibt;
eine zweite Stromrichteinheit (13), die so ausgelegt ist, dass sie einen Gleichstrom in einen ersten Wechselstrom umwandelt und den ersten Wechselstrom an den Ausgangsanschluss (OUT) ausgibt;
einen ersten Knoten (N1), der elektrisch zwischen den Ausgang der ersten Stromrichteinheit (12) und den Eingang der zweiten Stromrichteinheit (13) geschaltet ist;
eine Steuereinheit (17), die so ausgelegt ist, dass sie den Betrieb der ersten und zweiten Stromrichteinheit (12, 13) steuert;
wobei eine erste und eine zweite Batteriegruppe (15-1, 15-2) jeweils mit der Steuereinheit (17) verbunden und elektrisch an den ersten Knoten (N1) anschließbar sind,
wobei die Steuereinheit (17) so ausgelegt ist, dass sie abhängig von einem vorher festgelegten Zustand die erste oder zweite Batteriegruppe dynamisch als erste dynamische Batteriegruppe und die andere Batteriegruppe, erste oder zweite Batteriegruppe, als zweite dynamische Batteriegruppe zuweist, wobei
die erste dynamische Batteriegruppe in einem Stromversorgungsbetrieb arbeitet und die zweite dynamische Batteriegruppe in einem Bereitschaftsbetrieb arbeitet, **gekennzeichnet durch**
eine Überbrückungsschaltung (11), die elektrisch an den Eingangsanschluss (IN) und den Ausgangsanschluss (OUT) angeschlossen ist und so die erste und zweite Stromrichteinheit (12, 13) überbrückt,
wobei der vorher festgelegte Zustand einer zweiten Notfallsituation entspricht, die dem Fall entspricht, in dem eine Leistung für eine Last am Ausgangsanschluss (OUT) der Stromversorgungsvorrichtung (1) höher ist als die Leistung am Eingangsanschluss (IN), und
wobei in der zweiten Notfallsituation die Steuereinheit (17) so ausgelegt ist, dass sie die Stromführung des externen Wechselstroms zum Ausgangsanschluss (OUT) der Stromversorgungsvorrichtung (1) zusätzlich zur Energie der ersten dynamischen Batteriegruppe steuert.

2. Stromversorgungsvorrichtung (1) nach Anspruch 1, ferner umfassend:
eine erste Schalteinheit (SW1-1), die zwischen den Eingangsanschluss (IN) der Stromversorgungsvorrichtung (1) und den Eingang der ersten Stromrichteinheit (12) geschaltet ist, und
eine zweite Schalteinheit (SW1-2), die elektrisch zwischen den Ausgang der zweiten Stromrichteinheit (13) und den Ausgangsanschluss (OUT) der Stromversorgungsvorrichtung geschaltet ist,
wobei die Steuereinheit (17) so ausgelegt ist, dass sie den Betrieb des ersten und zweiten Schaltelements (SW1-2, SW1-2) steuert.

3. Stromversorgungsvorrichtung (1) nach einem der vorhergehenden Ansprüche, ferner umfassend:
eine dritte Schalteinheit (SW2-1), die an einem Ende elektrisch am ersten Knoten (N1) und am anderen Ende an der ersten Batteriegruppe (15-1) angeschlossen ist, und
eine vierte Schalteinheit (SW2-2), die an einem Ende elektrisch am ersten Knoten (N1) und am anderen Ende an der zweiten Batteriegruppe (15-2) angeschlossen ist,
wobei die Steuereinheit (17) so ausgelegt ist, dass sie den Betrieb des dritten und vierten Schaltelements (SW2-1, SW2-2) so steuert, dass die erste dynamische Batteriegruppe (15-1, 15-2) an den ersten Knoten (N1) angeschlossen ist und die zweite dynamische Batteriegruppe nicht an den ersten Knoten (N1) angeschlossen ist.

4. Stromversorgungsvorrichtung (1) nach einem der vorhergehenden Ansprüche, wobei die Steuereinheit (17) so ausgelegt ist, dass sie Folgendes ermittelt:
einen Normalbetriebszustand, und
der vorher festgelegte Zustand entspricht einer ersten Notfallsituation, die einem Stromausfall am Eingangsanschluss (IN) entspricht.

5. Stromversorgungsvorrichtung (1) nach Anspruch 1 oder 4, wobei beim Ermitteln eines Endes der ersten beziehungsweise zweiten Notfallsituation die Steuereinheit (17) so ausgelegt ist, dass sie die Zufuhr von Energie der ersten dynamischen Batteriegruppe (15-1, 15-2) beendet, und so ausgelegt ist, dass sie zum Wiederaufladen der ersten dynamischen Batteriegruppe (15-1, 15-2) den Eingangsanschluss (IN) elektrisch an die jeweilige erste dynamische Batteriegruppe (15-1, 15-2) anschließt.

6. Stromversorgungsvorrichtung (1) nach einem der vorhergehenden Ansprüche, wobei die Steuereinheit (17) ferner so ausgelegt ist, dass sie einen Ladezustand der ersten und zweiten Batteriegruppe (15-1, 15-2) derart vergleicht, dass die Batteriegruppe (15-1, 15-2) mit einem höheren Ladezustand für die Stromversorgung verwendet wird.

7. Stromversorgungsvorrichtung (1) nach einem der vorhergehenden Ansprüche, wobei die Steuereinheit (17) ferner so ausgelegt ist, dass sie eine Einsatz- oder Verwendungshäufigkeit der ersten und zweiten Batteriegruppe (15-1, 15-2) als erste dynamische Batteriegruppe derart vergleicht, dass die Batteriegruppe (15-1, 15-2) mit einer geringeren Einsatzhäufigkeit zur Stromversorgung verwendet wird.

8. Stromversorgungsvorrichtung (1) nach einem der vorhergehenden Ansprüche, wobei die Steuereinheit (17) ferner so ausgelegt ist, dass die Temperatur der ersten und zweiten Batteriegruppe (15-1, 15-2) derart vergleicht, dass die Batteriegruppe (15-1, 15-2) mit der niedrigeren Temperatur für die Stromversorgung verwendet wird.

9. Stromversorgungsvorrichtung (1) nach einem der vorhergehenden Ansprüche, wobei die Steuereinheit (17) ferner so ausgelegt ist, dass sie in einem Normalbetriebszustand die Stromführung des externen Wechselstroms am Eingang zum Ausgang der Stromversorgungsvorrichtung (1) steuert.

10. Stromversorgungsvorrichtung (1) nach einem der vorhergehenden Ansprüche, ferner umfassend ein Batteriemanagementsystem (16), das so ausgelegt ist, dass es das Laden und Entladen der ersten und zweiten Batteriegruppe (15-1, 15-2) steuert, wobei das Batteriemanagementsystem (16) mit der Steuereinheit (17) verbunden ist.

11. Stromversorgungsvorrichtung (1) nach einem der vorhergehenden Ansprüche, ferner umfassend eine Vielzahl von Temperatursensoren zum Messen der Temperatur der ersten und zweiten Batteriegruppe (15-1, 15-2).

12. Stromversorgungsvorrichtung (1) nach einem der vorhergehenden Ansprüche, wobei die Steuereinheit (17) ferner so ausgelegt ist, dass sie eine Zuordnung einer ersten oder zweiten Batteriegruppe (15-1, 15-2) zur ersten dynamischen Batteriegruppe ändert, wenn die in der zugeordneten Batteriegruppe (15-1, 15-2) gespeicherte elektrische Energie unter ein erforderliches Energieniveau fällt.

## Revendications

1. Appareil d'alimentation (1), comprenant :
une borne d'entrée (IN) adaptée de façon à recevoir une alimentation en courant alternatif externe ;
une borne de sortie (OUT) adaptée de façon à délivrer en sortie une première alimentation en courant alternatif ;
une première unité de conversion d'alimentation (12) adaptée de façon à convertir l'alimentation en courant alternatif externe reçue en une première alimentation en courant continu, et qui délivre en sortie la première alimentation en courant continu ;
une deuxième unité de conversion d'alimentation (13) adaptée de façon à convertir une alimentation en courant continu en une première alimentation en courant alternatif, et qui délivre en sortie la première alimentation en courant alternatif à la borne de sortie (OUT) ;
un premier noeud (N1) électriquement connecté entre la sortie de la première unité de conversion d'alimentation (12) et l'entrée de la deuxième unité de conversion d'alimentation (13) ;
une unité de commande (17) adaptée de façon à commander les fonctionnements des première et deuxième unités de conversion d'alimentation (12, 13) ;
dans lequel un premier et un deuxième groupes de batteries (15-1, 15-2) sont chacun connectés à l'unité de commande (17) et peuvent être électriquement connectés au premier noeud (N1),
dans lequel l'unité de commande (17) est adaptée de façon à affecter de façon dynamique l'un du premier et du deuxième groupes de batteries à titre de premier groupe de batteries dynamique et l'autre du premier et du deuxième groupes de batteries à titre de deuxième groupe de batteries dynamique en fonction d'une condition prédéterminée, où :
le premier groupe de batteries dynamique fonctionne dans un mode d'alimentation, et le deuxième groupe de batteries dynamique fonctionne dans un mode de veille, **caractérisé par** :
un circuit de dérivation (11) électriquement connecté à la borne d'entrée (IN) et à la borne de sortie (OUT) de façon à contourner les première et deuxième unités de conversion d'alimentation (12, 13),
dans lequel la condition prédéterminée correspond à une deuxième situation d'urgence, qui correspond au cas dans lequel une puissance pour une charge à la borne de sortie (OUT) de l'appareil d'alimentation (1) dépasse la puissance à la borne d'entrée (IN), et
dans lequel, dans la deuxième situation d'urgence, l'unité de commande (17) est adaptée de façon à commander la délivrance de l'alimentation en courant alternatif externe à la borne de sortie (OUT) de l'appareil d'alimentation (1) en plus de l'énergie du premier groupe de batteries dynamique.

2. Appareil d'alimentation (1) selon la revendication 1, comprenant de plus :
une première unité de commutation (SW1-1) connectée entre la borne d'entrée (IN) de l'appareil d'alimentation (1) et l'entrée de la première unité de conversion d'alimentation (12), et
une deuxième unité de commutation (SW1-2) électriquement connectée entre la sortie de la deuxième unité de conversion d'alimentation (13) et la borne de sortie (OUT) de l'appareil d'alimentation,
dans lequel l'unité de commande (17) est adaptée de façon à commander le fonctionnement des premier et deuxième éléments de commutation (SW1-2, SW1-2).

3. Appareil d'alimentation (1) selon l'une quelconque des revendications précédentes, comprenant de plus :
une troisième unité de commutation (SW2-1) électriquement connectée, à une extrémité, au premier noeud (N1), et, à l'autre extrémité, au premier groupe de batteries (15-1), et
une quatrième unité de commutation (SW2-2) électriquement connectée, à une extrémité, au premier noeud (N1), et, à l'autre extrémité, au deuxième groupe de batteries (15-2),
dans lequel l'unité de commande (17) est adaptée de façon à commander le fonctionnement des troisième et quatrième éléments de commutation (SW2-1, SW2-2) de telle sorte que le premier groupe de batteries dynamique (15-1, 15-2) soit connecté au premier noeud (N1) et que le deuxième groupe de batteries dynamique ne soit pas connecté au premier noeud (N1).

4. Appareil d'alimentation (1) selon l'une quelconque des revendications précédentes, dans lequel l'unité de commande (17) est adaptée de façon à déterminer :
un état de fonctionnement normal, et
la condition prédéterminée correspond à une première situation d'urgence, qui correspond à une coupure au niveau de la borne d'entrée (IN).

5. Appareil d'alimentation (1) selon la revendication 1 ou 4, dans lequel, lors de la détermination d'un achèvement de la première ou de la deuxième situation d'urgence, respectivement, l'unité de commande (17) est adaptée de façon à interrompre la délivrance d'énergie du premier groupe de batteries dynamique (15-1, 15-2) et est adaptée de façon à connecter électriquement la borne d'entrée (IN) au premier groupe de batteries dynamique respectif (15-1, 15-2) de façon à recharger le premier groupe de batteries dynamique (15-1, 15-2).

6. Appareil d'alimentation (1) selon l'une quelconque des revendications précédentes, dans lequel l'unité de commande (17) est de plus adaptée de façon à comparer un état de charge des premier et deuxième groupes de batteries (15-1, 15-2) de telle sorte que le groupe de batteries (15-1, 15-2) avec l'état de charge le plus élevé soit utilisé pour l'alimentation.

7. Appareil d'alimentation (1) selon l'une quelconque des revendications précédentes, dans lequel l'unité de commande (17) est de plus adapté de façon à comparer un nombre ou un décompte d'utilisation des premier et deuxième groupes de batteries (15-1, 15-2) comme premier groupe de batteries dynamique de telle sorte que le groupe de batteries (15-1, 15-2) avec le plus petit nombre d'utilisations soit utilisé pour l'alimentation.

8. Appareil d'alimentation (1) selon l'une quelconque des revendications précédentes, dans lequel l'unité de commande (17) est de plus adaptée de façon à comparer la température des premier et deuxième groupes de batteries (15-1, 15-2), de telle sorte que le groupe de batteries (15-1, 15-2) avec la plus basse température soit utilisé pour l'alimentation.

9. Appareil d'alimentation (1) selon l'une quelconque des revendications précédentes, dans lequel l'unité de commande (17) est de plus adaptée de façon à commander la délivrance de l'alimentation en courant alternatif externe d'entrée à la sortie de l'appareil d'alimentation (1) dans un état de fonctionnement normal.

10. Appareil d'alimentation (1) selon l'une quelconque des revendications précédentes, comprenant de plus un système de gestion de batterie (16) adapté de façon à commander la charge et la décharge des premier et deuxième groupes de batteries (15-1, 15-2), dans lequel le système de gestion de batterie (16) est connecté à l'unité de commande (17).

11. Appareil d'alimentation (1) selon l'une quelconque des revendications précédentes, comprenant de plus une pluralité de capteurs de température pour mesurer la température des premier et deuxième groupes de batteries (15-1, 15-2).

12. Appareil d'alimentation (1) selon l'une quelconque des revendications précédentes, dans lequel l'unité de commande (17) est de plus adaptée de façon à changer l'affectation d'un premier ou d'un deuxième groupe de batteries (15-1, 15-2) au premier groupe de batteries dynamique si l'énergie électrique stockée dans le groupe de batteries affecté (15-1, 15-2) chute en dessous d'un niveau d'énergie requis.
